# EUROPEAN PATENT SPECIFICATION

(11) **EP 3 889 018 B1**
(45) Date of publication and mention of the grant of the patent: **28.12.2022**
(21) Application number: 19890358.5
(22) Date of filing: 28.11.2019
(51) Int. Cl.: F01M 1/02, F01M 1/12, F01M 11/00, F01M 11/02, F01M 11/03, F02B 61/02, B62J 31/00

(54) **SADDLED VEHICLE**
SATTELFAHRZEUG
VÉHICULE À SELLE

(30) Priority: 30.11.2018 JP 2018226047
(43) Date of publication of application: 06.10.2021
(73) Proprietor: HONDA MOTOR CO., LTD., Minato-ku Tokyo 107-8556 (JP)
(72) Inventor: YOKOTANI Hitoshi, Wako-shi, Saitama 351-0193 (JP); KATSUTA Jumpei, Wako-shi, Saitama 351-0193 (JP); MORIYAMA Yuichi, Wako-shi, Saitama 351-0193 (JP)
(74) Representative: Kiwit, Benedikt
(86) International application number: PCT/JP2019/046608
(87) International publication number: WO 2020/111188

(56) References cited:
- EP-A1- 1 905 970
- EP-A1- 3 321 480
- DE-A1- 10 029 844
- JP-A- 2003 161 133
- JP-A- 2012 255 365
- JP-A- 2013 100 753
- JP-A- 2015 121 105
- JP-A- 2016 151 193
- JP-A- 2018 075 975
- US-A1- 2003 098 203

## Description

### FIELD

The present invention relates to a saddled vehicle including: a vehicle body frame; a crankcase defining a crank chamber for housing a counterweight of a crankshaft, the crankcase being coupled to the vehicle body frame to swing about a swing axis; a swing element coupled to the crankcase and rotatably holding a rear wheel; and a scavenge pump fixed to the crankcase and recovering oil in the crank chamber.

### BACKGROUND

JP 2018 - 075 975 A discloses a scavenge pump that recovers oil in a crank chamber. A crankcase defines the crank chamber for housing a counterweight. A scavenge pump is disposed outside the crank chamber and fixed to the crankcase.

EP 3 321 480 A1 discloses a saddled vehicle with a vehicle body frame, a crankcase, a scavenge pump with a suction passage and a scavenge discharge port.

### BRIEF SUMMARY

### TECHNICAL PROBLEM

In this structure, the oil is discharged upward from the scavenge pump and hits the inner wall of the crankcase, to flow down the inner wall of the crankcase and directly flow into an oil reservoir. At the oil reservoir, a suction passage continuous to a suction port of the feed pump is open. Since the distance from the discharge port of the scavenge pump to the suction passage is short, bubbles may remain in the oil. The bubbles in the oil reduce the pressure of the oil discharged from the feed pump.

The present invention has been made in view of the foregoing, and an object thereof is to provide a saddled vehicle equipped with a crankcase where release of bubbles from oil is facilitated.

### SOLUTION TO PROBLEM

According to a first aspect of the present invention, a saddled vehicle includes: a vehicle body frame; a crankcase that defines a crank chamber for housing a counterweight of a crankshaft, the crankcase being coupled to the vehicle body frame to swing about a swing axis; a swing element that is coupled to the crankcase and rotatably holds a rear wheel; a scavenge pump that is fixed to the crankcase and recovers oil in the crank chamber; a scavenge suction passage that is open at the crank chamber and connected to a suction port of the scavenge pump; and a scavenge discharge port where the oil is discharged from the scavenge pump into an oil chamber that is separated from the crank chamber and provided in the crankcase below the crank chamber. The oil chamber includes a partition wall that laterally partitions the oil chamber to divide the oil chamber into a first channel space on an upper side and a second channel space on a lower side. The partition wall includes at least one communication hole that is continuous from the first channel space to the second channel space and that allows the oil to flow from the first channel space to the second channel space.

According to a second aspect, in addition to the configuration of the first aspect, the scavenge pump has its discharge port opposed to an inner wall of the crankcase.

According to a third aspect, in addition to the configuration of the first or second aspect, the saddled vehicle further includes a feed suction passage connected to a suction port of a feed pump and draws in the oil from the oil chamber, and a feed discharge passage that is connected to a discharge port of the feed pump and guides the oil toward bearing of the crankshaft. At least two out of the scavenge suction passage, the feed suction passage, and the feed discharge passage three-dimensionally cross each other.

According to a fourth aspect, in addition to the configuration of the third aspect, the saddled vehicle further includes a water pump that shares a drive shaft with the scavenge pump and the feed pump.

According to a fifth aspect, in addition to the configuration of the third or fourth aspect, the saddled vehicle further includes a first guide channel that passes through the communication hole to reach an upstream end of the feed suction passage, and a second guide channel that detours the first guide channel to reach the upstream end of the feed suction passage.

According to a sixth aspect, in addition to the configuration of any one of the third to fifth aspects, the saddled vehicle further includes a filter that is opposed to the partition wall from below to define space with the partition wall, the space being connected to an entrance of the feed suction passage.

### ADVANTAGEOUS EFFECTS

According to the first aspect, in the oil chamber, the oil flows downward by gravity. The partition wall regulates the flow of the oil from the first channel space to the second channel space. By adjusting the position of the communication hole, the channel of the oil is set to a desired length. The channel of a sufficient length facilitates release of bubbles in the oil. The feed pump supplies the oil of a sufficient amount in response to the release of bubbles.

According to the second aspect, the scavenge pump discharges the oil toward the inner wall of the crankcase. The oil flows down the wall. This suppresses generation of bubbles. On the other hand, if the discharge port of the scavenge pump is directed to the crankshaft, the oil would be agitated by the rotation of the crankshaft and bubbles would be easily generated. If the discharge port of the scavenge pump is directed downward, the oil would splash into the surface of the accumulated oil and bubbles would be easily generated.

According to the third aspect, the positioning relationship of the scavenge suction passage, the feed suction passage, and the feed discharge passage is flexible. Accordingly, the oil paths can be effectively designed without being constrained by the positional relationship of the scavenge suction passage, the feed suction passage, and the feed discharge passage.

According to the fourth aspect, the water pump causes the cooling water to flow, to contribute to cooling the oil. Since the scavenge pump, the feed pump, and the water pump share the drive shaft, the number of components is reduced. The space efficiency improves.

According to the fifth aspect, the first guide channel and the second guide channel forming branches provides a sufficient length to the feed suction passage. The channel of a sufficient length facilitates the release of bubbles from the oil. The feed pump supplies the oil of a sufficient amount in response to the release of bubbles.

According to the sixth aspect, the oil flowing into the feed suction passage is purified by the filter. The wall provided between the crankshaft and the link boss improves solidity between the crankshaft and the link boss.

### BRIEF DESCRIPTION OF DRAWINGS

FIG. 1 is a schematic side view of the whole saddled vehicle (motorcycle) according to one embodiment of the present invention (a first embodiment).
FIG. 2 is an enlarged horizontal cross-sectional view of a power unit taken along line 2-2 in FIG. 1 (the first embodiment).
FIG. 3 is a schematic enlarged side view of the structure inside a generator chamber of a crankcase (the first embodiment).
FIG. 4 is an enlarged sectional view of the range specified by arrow 4 in FIG. 3 (the first embodiment).
FIG. 5 is an enlarged side view of an engine (the first embodiment).
FIG. 6 is a schematic enlarged side view of the structure of the inner surface of a first case half (the first embodiment).
FIG. 7 is a schematic enlarged side view of the structure of the inner surface of a second case half coupled to the first case half (the first embodiment).
FIG. 8 is a schematic enlarged side view of the structure of the outer surface of the first case half (the first embodiment).
FIG. 9 is an enlarged side view taken along line 9-9 in FIG. 3 including the axes of the drive shafts of a scavenge pump and a feed pump (the first embodiment).
FIG. 10 is a schematic enlarged vertical cross-sectional view of oil supply paths in the first case half (the first embodiment).

### Reference Signs List

11: saddled vehicle (motorcycle)
12: vehicle body frame
29: crankcase
41: crank chamber
42: crankshaft
43a: bearing (first sliding bearing)
43b: bearing (second sliding bearing)
47: part of third guide channel (generator chamber)
51: swing element
107: water pump
121: scavenge pump
122a: suction port
122b: scavenge discharge port
124: scavenge suction passage
135: oil chamber
147a: feed discharge passage (longitudinal oil channel)
147b: feed discharge passage (longitudinal oil channel)
152a: first guide channel
152b: second guide channel
153: first channel space
154: second channel space
155: partition wall
156: communication hole
158: space (clean chamber) connected to feed suction passage
159: filter
161: part of third guide channel (first opening)
162: part of third guide channel (second opening)
163: part of third guide channel (third opening)
164: part of third guide channel (fourth opening)
168: feed pump
172: drive shaft (of impeller)
173: feed suction passage
Sx: swing axis of (crankcase)
WR: rear wheel

### DETAILED DESCRIPTION

In the following, with reference to the accompanying drawings, a description will be given of one embodiment of the present invention. Note that, in the following description, the front, rear, upper, lower, right, and left directions are based on the view of the rider on a motorcycle.

### First embodiment

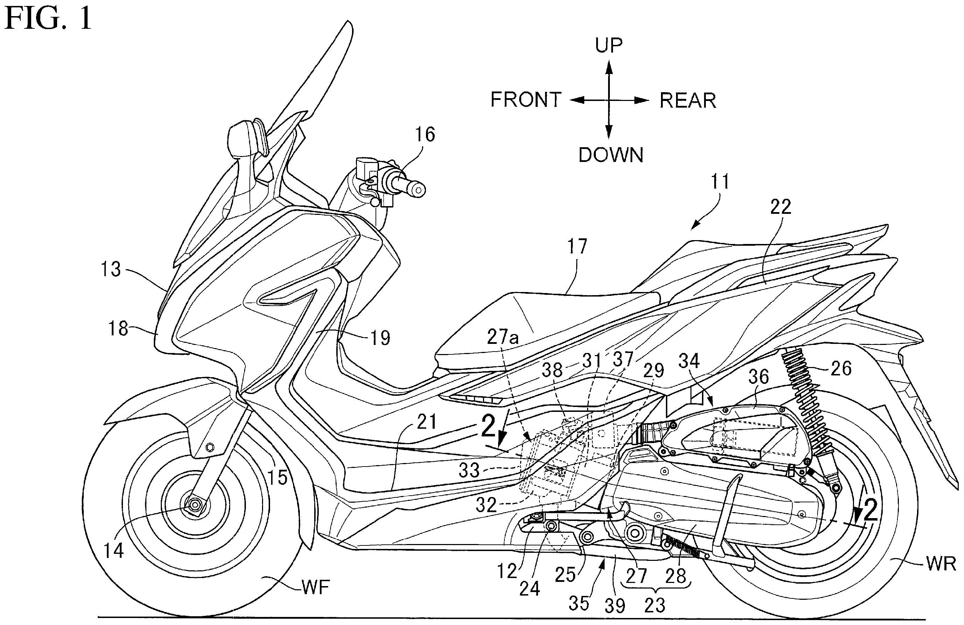

FIG. 1 schematically illustrates a scooter-type motorcycle according to one embodiment of a saddled vehicle. A motorcycle 11 includes a vehicle body frame 12 and a vehicle body cover 13 mounted on the vehicle body frame 12. A head pipe of the vehicle body frame 12 holds in a steerable manner a front fork 15, which holds a front wheel WF to be rotatable about an axle 14, and a rod-like steering handle 16.

On the vehicle body cover 13, a rider's seat 17 is mounted above a rear frame. The vehicle body cover 13 includes: a front cover 18 that covers the head pipe from the front side; a leg shield 19 that is continuous rearward from the front cover 18; a step floor 21 that is continuous from the lower end of the leg shield 19 and disposed above a main frame between the rider's seat 17 and the front wheel WF; and a rear cover 22 that supports the rider's seat 17 on the rear frame.

In the space below the rear cover 22, a unit swing-type power unit 23 is disposed. The power unit 23 is coupled, to be swingable in the top-bottom direction, via a link 25 to a bracket 24 coupled to the front end of the rear frame. The power unit 23 holds by its rear end a rear wheel WR to be rotatable about the horizontal axis. At a point spaced apart from the link 25 and the bracket 24 and between the rear frame and the power unit 23, a rear cushion unit 26 is disposed. The power unit 23 includes a water-cooled single-cylinder engine 27 and a transmission case 28 that is coupled to an engine body 27a of the engine 27 and houses a transmission that transmits the output of the engine 27 to the rear wheel WR.

The engine body 27a of the engine 27 includes: a crankcase 29 that holds a crankshaft (described later) to be rotatable about the rotation axis; a cylinder block 31 coupled to the crankcase 29; a cylinder head 32 coupled to the cylinder block 31; and a head cover 33 coupled to the cylinder head 32. To the cylinder head 32, an intake device 34 and an exhaust device 35 are connected. The intake device 34 includes an air cleaner 36 held by the transmission case 28 to draw in and purifies the outside air and a throttle body 37 as an intake-system component that connects the air cleaner 36 to the cylinder head 32.

In the throttle body 37, a throttle functions to adjust the flow rate of the purified air supplied from the air cleaner 36. A fuel injection device 38 is mounted on the upper side wall of the cylinder head 32. The fuel injection device 38 injects fuel into the purified air to form an air-fuel mixture.

The exhaust device 35 includes: an exhaust pipe 39 that extends rearward from the lower side wall of the cylinder head 32 beneath the engine 27; and an exhaust muffler (not illustrated) that is connected to the downstream end of the exhaust pipe 39 and coupled to the crankcase 29.

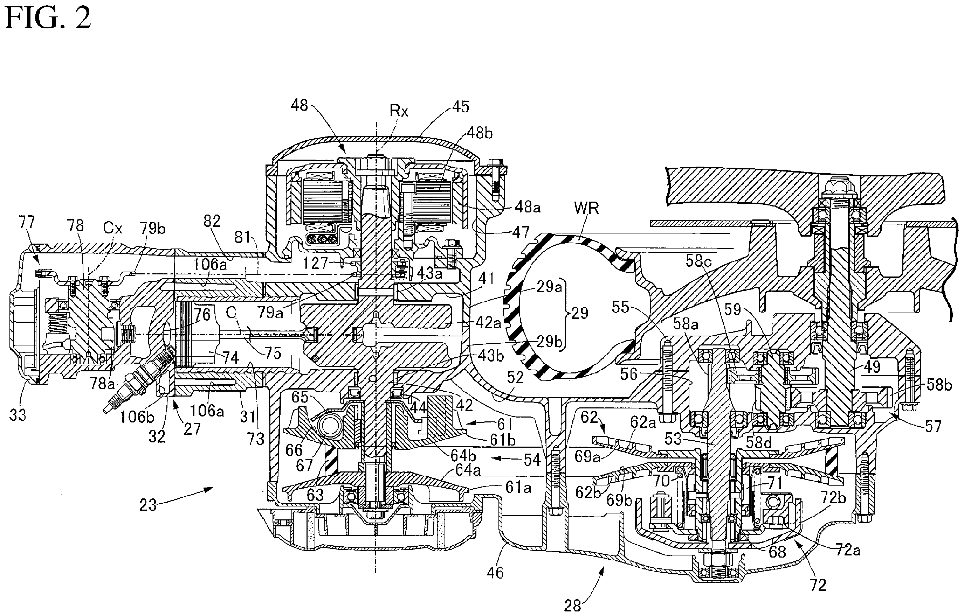

As illustrated in FIG. 2, the crankcase 29 includes a first case half 29a and a second case half 29b. The first case half 29a and the second case half 29b define a crank chamber 41 in combination. The crank chamber 41 houses a counterweight 42a of a crankshaft 42. On the first case half 29a, a first sliding bearing 43a is mounted. The first sliding bearing 43a rotatably holds a first journal of the crankshaft 42. On the second case half 29b, a second sliding bearing 43b is mounted. The second sliding bearing 43b rotatably holds a second journal of the crankshaft 42.

On the outer side of the second sliding bearing 43b, a packing 44 is mounted on the second case half 29b coaxially to the crankshaft 42. The packing 44 is in contact with the outer circumference of the crankshaft 42 to seal the interface between the second case half 29b and the crankshaft 42. The packing 44 liquid-tightly seals the crank chamber 41.

The crankcase 29 further includes: a generator cover 45 as a first case cover that is coupled to the first case half 29a and covers one end of the crankshaft 42, which projects outward from the first sliding bearing 43a; and a transmission cover 46 as a second case cover that is coupled to the second case half 29b and covers other end of the crankshaft 42, which projects outward from the second sliding bearing 43b. The generator cover 45 forms a generator chamber 47 with the first case half 29a.

The generator chamber 47 houses an AC generator (ACG) 48 that is coupled to one end of the crankshaft 42. The AC generator 48 includes: a cylindrical rotor 48a that is fixed to one end of the crankshaft 42 projecting from the outer surface of the first case half 29a; and a stator 48b surrounded by the rotor 48a and disposed around the crankshaft 42. The stator 48b includes a plurality of stator cores that are fixed to the first case half 29a and annularly arranged. A coil is wrapped around each stator core. The rotor 48a includes a magnet that runs on an annular track on the radially outer side of the stator cores. The AC generator 48 generates power by relative rotation between the rotor 48a and the stator 48b. The AC generator 48 may be used as an ACG starter.

The second case half 29b rotatably holds an axle 49 of the rear wheel WR. The transmission cover 46 forms a transmission chamber 52 with the second case half 29b. The transmission chamber 52 houses a belt-type continuously variable transmission (hereinafter referred to as "the transmission") 54 that transmits rotational drive force from the crankshaft 42 to the driven shaft 53 while continuously changing the gear. The transmission 54 will be detailed later. The second case half 29b and the transmission cover 46 form a transmission case 28.

To the second case half 29b, a gear cover 55 that covers one end of a driven shaft 53 projecting from the second case half 29b to the axle 49 side of the rear wheel WR is fastened. The gear cover 55 forms a gear chamber 56 with the second case half 29b. The gear chamber 56 houses a reduction gear mechanism 57 that transmits rotational drive force from the driven shaft 53 to the axle 49 of the rear wheel WR at a predetermined reduction ratio.

The reduction gear mechanism 57 includes: a drive gear 58a fixed to the driven shaft 53 projecting from the gear chamber 56; a final gear 58b fixed to the axle 49 of the rear wheel WR; and idle gears 58c, 58d disposed between the drive gear 58a and the final gear 58b. The idle gears 58c, 58d are fixed to a shared intermediate shaft 59. The drive gear 58a meshes with the idle gear 58c and the final gear 58b meshes with the idle gear 58d. Thus, the rotation of the driven shaft 53 is reduced in speed to be transmitted to the axle 49 of the rear wheel WR.

The transmission 54 includes: a drive pulley 61 mounted on the crankshaft 42 projecting from the outer surface of the second case half 29b; a driven pulley 62 mounted on the driven shaft 53; and a V-belt (drive belt) 63 wrapped around the drive pulley 61 and the driven pulley 62.

The drive pulley 61 includes: a fixed umbrella element 61a that is fixed to the crankshaft 42 to be incapable of axially displacing and has its umbrella surface 64a opposed to the second case half 29b coaxially to the crankshaft 42; and a movable umbrella element 61b that is mounted on the crankshaft 42 to be axially displaceable between the fixed umbrella element 61a and the second case half 29b and has its umbrella surface 64b opposed to the umbrella surface 64a of the fixed umbrella element 61a coaxially to the crankshaft 42. The umbrella surface 64a of the fixed umbrella element 61a and the umbrella surface 64b of the movable umbrella element 61b define a belt groove. The V-belt 63 runs on the belt groove.

The movable umbrella element 61b has its outward surface (the back side of the umbrella surface 64a) opposed to a weight retaining plate 65 fixed to the crankshaft 42 to be incapable of axially displacing. Between a cam surface 66 of the movable umbrella element 61b and the weight retaining plate 65, a roller weight 67 is interposed. The cam surface 66 becomes far from the fixed umbrella element 61a as it becomes far in the centrifugal direction from the rotation axis Rx of the crankshaft 42. As the crankshaft 42 rotates, centrifugal force occurs at the roller weight 67. The roller weight 67 is displaced in the centrifugal direction by the centrifugal force. As the roller weight 67 is displaced in the centrifugal direction while making rolling contact with the cam surface 66, the movable umbrella element 61b is driven toward the fixed umbrella element 61a. Thus, as the crankshaft 42 rotates, the movable umbrella element 61b axially shifts toward the fixed umbrella element 61a and the wrapping radius of the V-belt 63 increases.

The driven pulley 62 includes: an inner cylinder 68 that is cylindrical and coaxial to the driven shaft 53 and coaxially mounted on the driven shaft 53; a fixed umbrella element 62a that is fixed to the inner cylinder 68 and has its umbrella surface 69a opposed to the transmission cover 46 coaxially to the driven shaft 53; an outer cylinder 71 that is cylindrical and coaxial to the driven shaft 53 and coaxially mounted on the inner cylinder 68; and a movable umbrella element 62b that is fixed to the outer cylinder 71 between the fixed umbrella element 62a and the transmission cover 46 and has its umbrella surface 69b opposed to the umbrella surface 69a of the fixed umbrella element 62a coaxially to the driven shaft 53. The umbrella surface 69a of the fixed umbrella element 62a and the umbrella surface 69b of the movable umbrella element 62b define a belt groove. The V-belt 63 runs on the belt groove. The inner cylinder 68 is held by the driven shaft 53 to be relatively displaceable. The outer cylinder 71 is held by the inner cylinder 68 to be relatively displaceable and incapable of axially relatively displacing. According to the axial relative displacement between the outer cylinder 71 and the inner cylinder 68, the movable umbrella element 62b becomes near to or far from the fixed umbrella element 62a, to realize automatic gear change.

A centrifugal clutch 72 is mounted on the driven shaft 53. The centrifugal clutch 72 includes a clutch plate 72a fixed to the inner cylinder 68. A helical spring 70 is disposed between the clutch plate 72a and the movable umbrella element 62b. The helical spring 70 exerts spring force that presses the movable umbrella element 62b against the fixed umbrella element 62a. As the wrapping radius of the V-belt 63 increases on the drive pulley 61, on the driven pulley 62, the movable umbrella element 62b becomes far from the fixed umbrella element 62a against the spring force of the helical spring 70 and the wrapping radius of the V-belt 63 reduces.

The centrifugal clutch 72 includes an outer plate 72b fixed to the driven shaft 53. The outer plate 72b is opposed to the clutch plate 72a. When the clutch plate 72a rotates, the outer plate 72b is coupled to the clutch plate 72a by the centrifugal force. Thus, the rotation of the driven pulley 62 is transmitted to the driven shaft 53. When the engine speed exceeds a set speed, the centrifugal clutch 72 establishes the power transmission state.

The cylinder block 31 is provided with a cylinder bore 73. Into the cylinder bore 73, a piston 74 is fitted to be slidable along a cylinder axis C. The piston 74 is coupled to the crank of the crankshaft 42 by a connecting rod 75. The cylinder axis C is slidably inclined frontward upward relative to the horizontal level. The cylinder block 31 guides the linear reciprocation movement of the piston 74 along the cylinder axis C. The linear reciprocation movement of the piston 74 is converted to the rotation movement of the crankshaft 42. A combustion chamber 76 is defined between the piston 74 and the cylinder head 32.

The engine 27 includes a valvetrain 77 that exerts control on introducing the air-fuel mixture from the intake device 34 toward the combustion chamber 76 and on discharging the exhaust gas from the combustion chamber 76 through the exhaust device 35. The valvetrain 77 includes a camshaft 78 that is held on the cylinder head 32 to be rotatable about a rotation axis Cx parallel to the rotation axis Rx of the crankshaft 42. The camshaft 78 is brought into contact with the intake valve and an exhaust valve by its valve operating cam 78a.

According to the cam profile of the valve operating cam 78a, the intake valve opens and closes an intake path that is formed at the cylinder head 32 and open at the ceiling surface of the combustion chamber 76. The intake path is connected to an air path of the throttle body 37. When the intake valve opens, the air-fuel mixture is introduced into the combustion chamber 76 from the intake path via the intake device 34.

According to the cam profile of the valve operating cam 78a, the exhaust valve opens and closes an exhaust path that is formed at the cylinder head 32 and open at the ceiling surface of the combustion chamber 76. The exhaust path is connected to the exhaust pipe. When the exhaust valve opens, the exhaust gas is discharged from the combustion chamber 76 toward the exhaust device 35.

The valvetrain 77 includes a cam chain 81 that is wrapped around a sprocket 79a coaxially fixed to the crankshaft 42 and a sprocket 79b coaxially fixed to the camshaft 78. The cam chain 81 links the opening and closing operations of the intake valve and the exhaust valve to the reciprocation movement of the piston 74. The crankcase 29, the cylinder block 31, and the cylinder head 32 include a cam chain chamber 82 for housing the cam chain 81. The cam chain chamber 82 is spatially connected to the generator chamber 47.

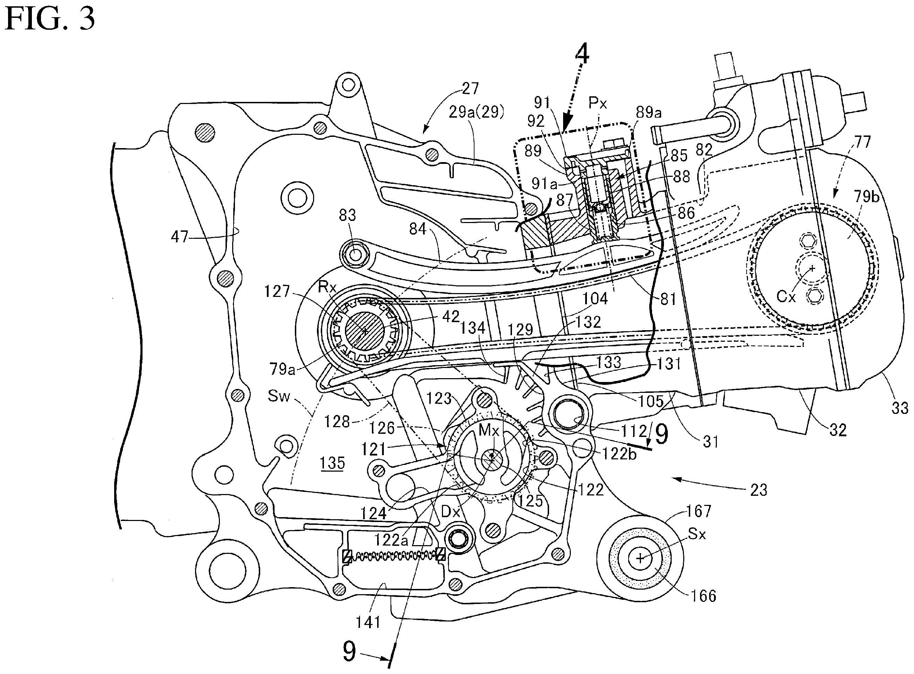

As illustrated in FIG. 3, the valvetrain 77 includes: a tensioner shoe 84 that is held by the crankcase 29 to be swingable about a swing shaft 83 extending parallel to the rotation axis Rx of the crankshaft 42 and slidably in contact with the cam chain 81; and a hydraulic tensioner 85 that is mounted on the cylinder block 31 at a position spaced apart from the swing shaft 83 and generates drive of pressing the tensioner shoe 84 against the cam chain 81. The hydraulic tensioner 85 maintains the tension of the cam chain 81.

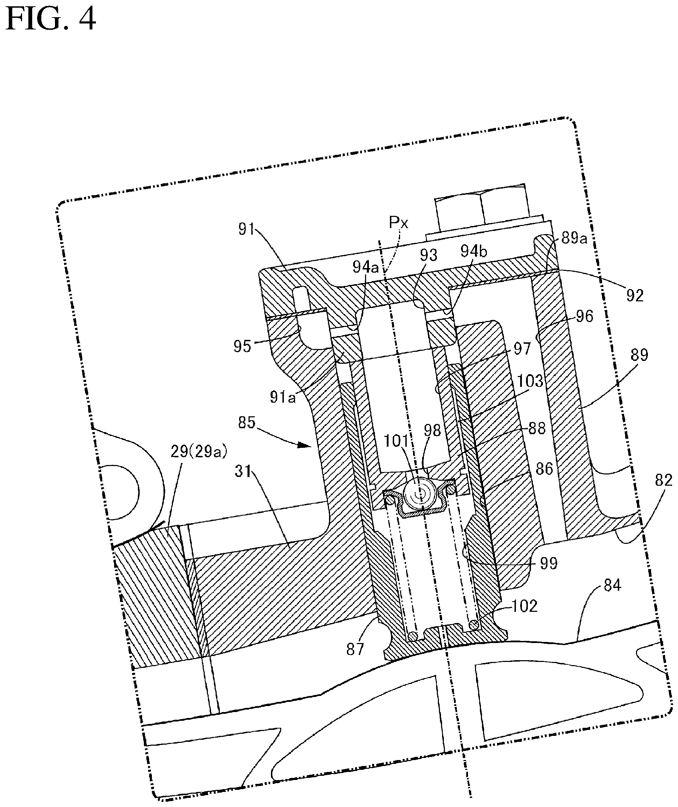

As illustrated in FIG. 4, the hydraulic tensioner 85 includes: a plunger 87 that is axially slidably fitted into a through hole 86; and an inner sleeve 88 that is fitted into the plunger 87 to be incapable of axially relatively displacing. The tip of the plunger 87 projects into the cam chain chamber 82 from the inner end of the through hole 86. The tip of the plunger 87 is pressed against the tensioner shoe 84 in the cam chain chamber 82.

The through hole 86 is bored through a mount 89 that is formed at the cylinder block 31 and projects from the outer wall of the cam chain chamber 82. A tensioner cap 91 is overlaid on a mount surface 89a of the mount 89. The mount surface 89a is formed as a plane perpendicular to the center axis Px of the plunger 87.

The tensioner cap 91 includes a stopper 91a that enters the through hole 86 to regulate the displacement of the inner sleeve 88 in becoming axially far from the tip of the plunger 87. The stopper 91a closes the outer end of the through hole 86. A gasket 92 is interposed between the mount surface 89a of the mount 89 and the tensioner cap 91. The gasket 92 seals the interface between the cylinder block 31 and the tensioner cap 91 around the through hole 86.

An oil chamber 93 is defined in the stopper 91a. The oil chamber 93 is connected to a supply path 95 by a communication hole 94a formed at the stopper 91a, and connected to a return path 96 by a communication hole 94b formed at the stopper 91a. The communication hole 94a regulates the flow rate of the oil from the supply path 95 toward the oil chamber 93. The communication hole 94b regulates the flow rate of the oil from the oil chamber 93 to the return path 96. The return path 96 is open at the cam chain chamber 82.

Inside the inner sleeve 88, a low pressure chamber 97 continuous to the oil chamber 93 of the stopper 91a is defined. The low pressure chamber 97 is connected to a high pressure chamber 99 defined between the inner sleeve 88 and the plunger 87 by a passage hole 98 formed at the inner sleeve 88. In the high pressure chamber 99, a spherical element 101 that closes the opening of the passage hole 98 is disposed. A helical spring 102 is disposed between the spherical element 101 and the plunger 87. The helical spring 102 exerts spring force of pressing the spherical element 101 against the opening of the passage hole 98. A leak clearance 103 is connected to the high pressure chamber 99, to extend along the outer surface of the inner sleeve 88 and the outer surface of the plunger 87 and reach the cam chain chamber 82.

As the pressure in the low pressure chamber 97 rises, the spherical element 101 leaves the inner sleeve 88 against the spring force of the helical spring 102. The oil flows from the passage hole 98 into the high pressure chamber 99. Thus, the pressure in the high pressure chamber 99 rises. When the pressure in the low pressure chamber 97 reduces, the spherical element 101 closes the passage hole 98. This maintains the pressure in the high pressure chamber 99. So long as the pressure in the high pressure chamber 99 is maintained, the pressure in the low pressure chamber 97 will not exceed the pressure in the high pressure chamber 99. Therefore, the oil flowing into the low pressure chamber 97 is released form the return path 96 to the cam chain chamber 82.

As illustrated in FIG. 3, the crankcase 29 and the cylinder block 31 are overlaid on each other by an interface 104 which is a plane perpendicular to the cylinder axis C. At the interface 104 between the crankcase 29 and the cylinder block 31, a gasket 105 is interposed. The gasket 105 seals the interface 104 between the crankcase 29 and the cylinder block 31 around the cylinder.

As illustrated in FIG. 2, the cylinder block 31 and the cylinder head 32 are provided with water jackets 106a, 106b that guide the communication of the cooling water around the combustion chamber 76. The water jacket 106a in the cylinder block 31 is defined around the cylinder bore 73 along the interface between the cylinder block 31 and the cylinder head 32. The water jacket 106b in the cylinder head 32 extends along the ceiling wall of the combustion chamber 76 continuous to the water jacket 106a in the cylinder block 31.

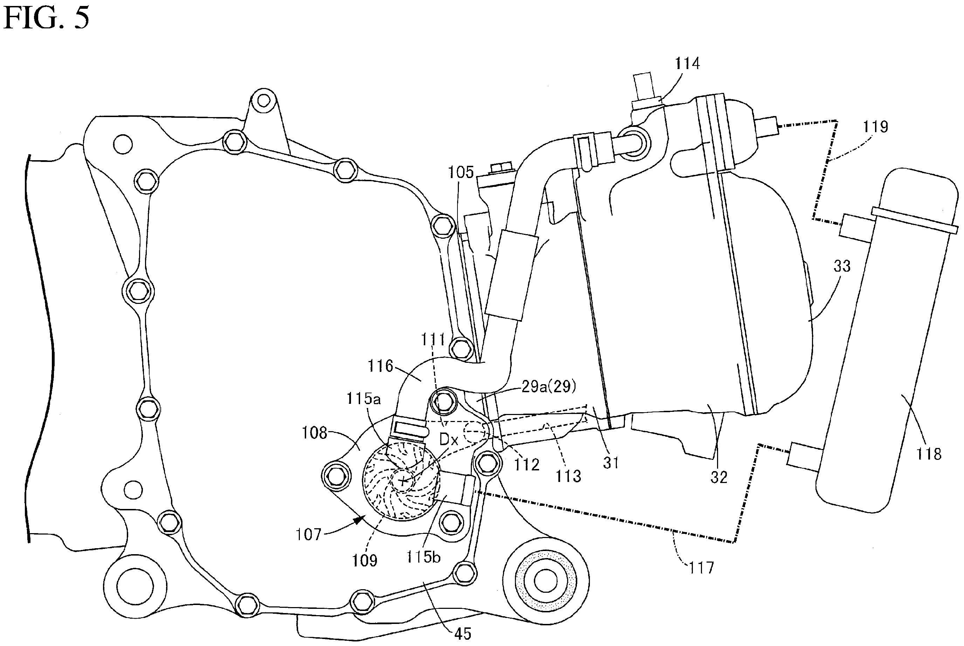

As illustrated in FIG. 5, a water pump 107 is mounted on the generator cover 45. The water pump 107 includes a pump cover 108 that defines a pump chamber with the generator cover 45. The pump chamber houses an impeller 109 that rotates about a rotation axis Dx, which is parallel to the rotation axis Rx of the crankshaft 42. A discharge port 111 is defined in the generator cover 45. The cooling water is discharged from the discharge port 111 according to the rotation of the impeller 109.

The first case half 29a of the crankcase 29 includes a first water channel 112 connected to the discharge port 111. The cylinder block 31 includes a second water channel 113 connected to the first water channel 112. The second water channel 113 is connected to the water jacket 106a in the cylinder block 31. The channel of the cooling water penetrates through the gasket 105 between the first water channel 112 and the second water channel 113. In the cylinder head 32, a thermostat 114 is connected to the water jacket 106b. The cooling water flows into the water jackets 106a, 106b via the first water channel 112 and the second water channel 113. The cooling water absorbs the thermal energy from the cylinder block 31 and the cylinder head 32 around the cylinder bore 73. The cooling water heated by the thermal energy flows into the thermostat 114.

The pump cover 108 includes a first suction port 115a and a second suction port 115b. The first suction port 115a is connected to a thermostat 114 by a first pipe 116. The cooling water flows into the first suction port 115a via the first pipe 116 from the thermostat 114.

The second suction port 115b is connected to the radiator 118 by the second pipe 117. The cooling water cooled by the radiator 118 flows into the pump chamber from the second suction port 115b. The radiator 118 is connected to the thermostat 114 by a third pipe 119. The cooling water is introduced into the radiator 118 from the thermostat 114, to be cooled by the radiator 118. Then, the cooling water flows into the pump chamber from the second suction port 115b.

The thermostat 114 feeds cooling water to the first pipe 116 until the cooling water reaches a prescribed temperature. The cooling water circulates without access to the radiator 118. The engine 27 is prevented from being excessively cooled until its temperature reaches the prescribed temperature.

When the temperature of the cooling water exceeds the prescribed temperature, the thermostat 114 feeds the cooling water to the third pipe 119. The cooling water is cooled by the radiator 118. Thus, the radiator 118 efficiently suppresses an increase in the temperature of the engine 27 when it exceeds a prescribed temperature.

As illustrated in FIG. 3, the first case half 29a of the crankcase 29 is equipped with a scavenge pump 121 that recovers the oil in the crank chamber 41. The scavenge pump 121 includes a pump cover (hereinafter referred to as "the scavenge cover") 123 that defines a pump chamber 122 with the first case half 29a. The scavenge pump 121 is a trochoid pump. Accordingly, the pump chamber 122 is formed as the space of a circular column whose center axis Mx is parallel to the rotation axis Rx of the crankshaft 42.

The pump chamber 122 rotatably houses an outer rotor whose cylindrical surface is slidably in contact with the inner circumferential surface of the circular column. The outer rotor accommodates an inner rotor that rotates about a rotation axis Dx eccentric from the center axis Mx of the pump chamber 122. The outer rotor and the inner rotor may be similar to those of a general trochoid pump. With the first case half 29a, the scavenge cover 123 forms a suction passage (hereinafter referred to as "the scavenge suction passage") 124 that extends from the suction port 122a of the pump chamber 122 and is open at the crank chamber 41.

A drive shaft 125 coaxial to the rotation axis Dx is fixed to the inner rotor. According to the rotation of the drive shaft 125, the inner rotor and the outer rotor rotate while meshing with each other. Outside the scavenge cover 123, a sprocket 126 is fixed to the drive shaft 125. A drive chain 128 is wrapped around the sprocket 126 and the sprocket 127 of the crankshaft 42. The drive chain 128 transmits the rotational drive force of the crankshaft 42 from the crankshaft 42 to the drive shaft 125. As the drive shaft 125 rotates, the oil is drawn into the scavenge pump 121 from the crank chamber 41.

The scavenge pump 121 includes a discharge port 122b that is oriented upward and opposed to the inner wall 129 of the crankcase 29. The inner wall 129 includes a partition wall 132 that extends upward from an outer wall 131 that defines the first water channel 112. A partition wall 132 defines an oil reservoir space 133 that is continuous from the cam chain chamber 82. The inner wall 129 have a plurality of (at least one) ribs 134 opposed to the discharge port 122b of the scavenge pump 121.

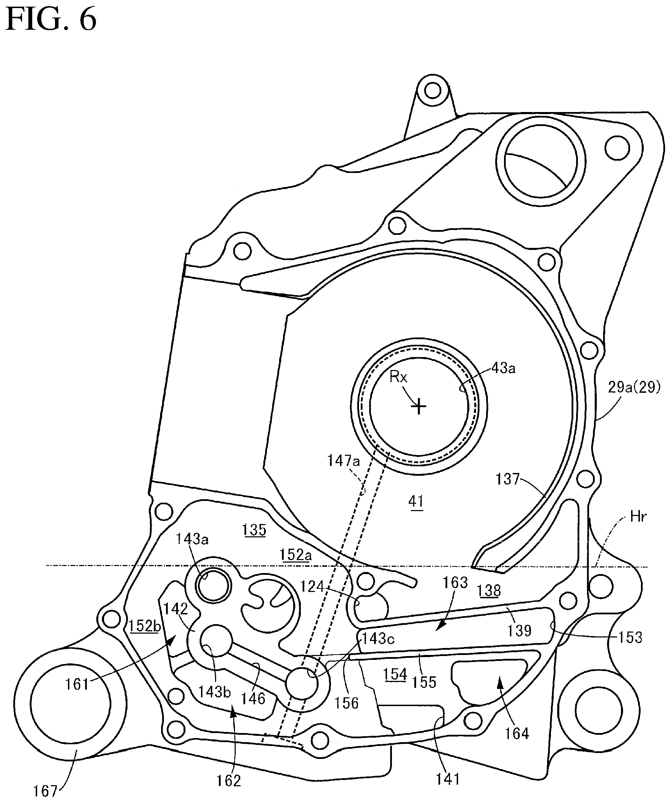

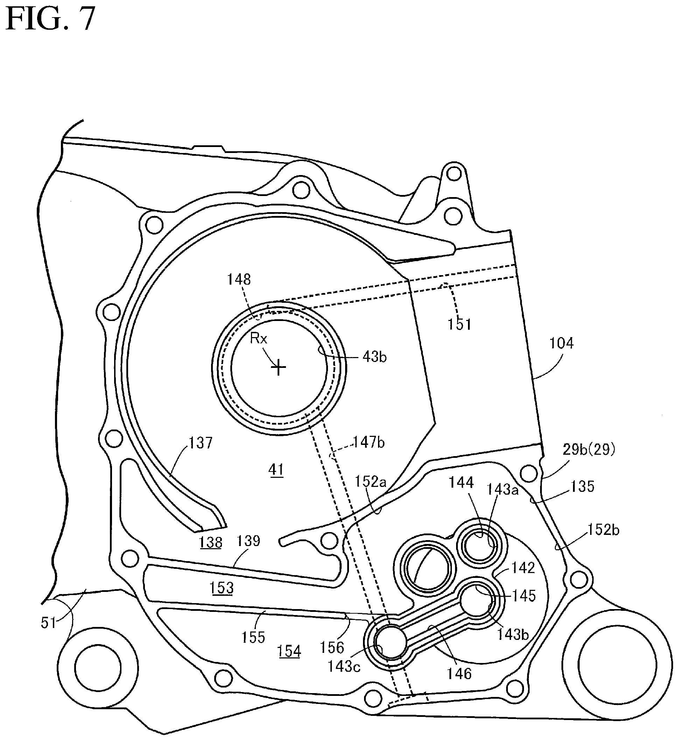

As illustrated in FIGS. 6 and 7, the oil chamber 135 is separated from the crank chamber 41 and defined between the first case half 29a and the second case half 29b below the crank chamber 41. The crank chamber 41 is surrounded by a surrounding wall 137 that is coaxial to the rotation axis Rx of the crankshaft 42 and extends along a virtual cylindrical plane that circumscribes the track of the crankshaft 42. To the crank chamber 41, an oil reservoir 138 is connected at the lowermost position in the gravity direction. The oil reservoir 138 is partitioned by a bottom wall 139, which is inclined frontward. At the front end of the oil reservoir 138, a scavenge suction passage 124 is open. The oil in the crank chamber 41 is gathered into the oil reservoir 138 by gravity and efficiently drawn into the scavenge pump 121.

As illustrated in FIG. 3, in the oil chamber 135, the scavenge discharge port 122b is open at a position higher than the scavenge suction passage 124. In the oil chamber 135, as compared to the configuration where the oil falls from the oil reservoir 138 by gravity, the falling distance increases. In the first case half 29a, an introduction port 141 for the oil is formed along the bottom of the oil chamber 135.

As illustrated in FIG. 6, a passage wall 142 is disposed in the oil chamber 135. The passage wall 142 includes a plurality of oil channels 143a, 143b, 143c that extend parallel to the rotation axis Rx of the crankshaft 42 at the first case half 29a and the second case half 29b coupled to each other. The oil channels include: a first oil channel 143a that is continuous to a flow-in port 144 of an oil filter removably mounted on the outer side of the second case half 29b; a second oil channel 143b that is continuous to a flow-out port 145 of the oil filter; and a third oil channel 143c that is connected to the second oil channel 143b by a connection path 146. The third oil channel 143c is connected to: a linear longitudinal oil channel 147a formed in the first case half 29a and connected to the first sliding bearing 43a; and a linear longitudinal oil channel 147b formed in the second case half 29b and connected to the second sliding bearing 43b. The oil purified by the oil filter passes through the second oil channel 143b and the third oil channel 143c, to flow into the first sliding bearing 43a and the second sliding bearing 43b.

As illustrated in FIG. 7, the second case half 29b includes, in addition to the longitudinal oil channel 147b and the third oil channel 143c connected to the second sliding bearing 43b of the crankshaft 42, a lateral oil channel 151 that linearly extends from an oil channel 148 around the second sliding bearing 43b to reach the interface 104 between the crankcase 29 and the cylinder block 31. The cylinder block 31 includes a supply path that is connected to the lateral oil channel 151 at the interface 104 between the crankcase 29 and the cylinder block 31 and connected to the oil channel of the camshaft 78. The oil channel between the lateral oil channel 151 and the supply path penetrates through the gasket 105.

The passage wall 142 forms, in the oil chamber 135; a first guide channel 152a that passes behind the passage wall 142 to reach the introduction port 141; and a second guide channel 152b that is separated by the passage wall 142 from the first guide channel 152a and passes ahead the passage wall 142 to reach the introduction port 141. What is disposed in the first guide channel 152a is a partition wall 155 that extends in the horizontal direction in the oil chamber 135 to divide the oil chamber 135 into a first channel space 153 on the upper side and a second channel space 154 on the lower side. The first channel space 153 corresponds to the space surrounded by a bottom wall of the crank chamber 41 and the partition wall 155. The second channel space 154 corresponds to the space surrounded by the bottom wall of the crankcase 29 and the partition wall 155. The partition wall 155 includes at least one communication hole 156 continuous from the first channel space 153 to the second channel space 154.

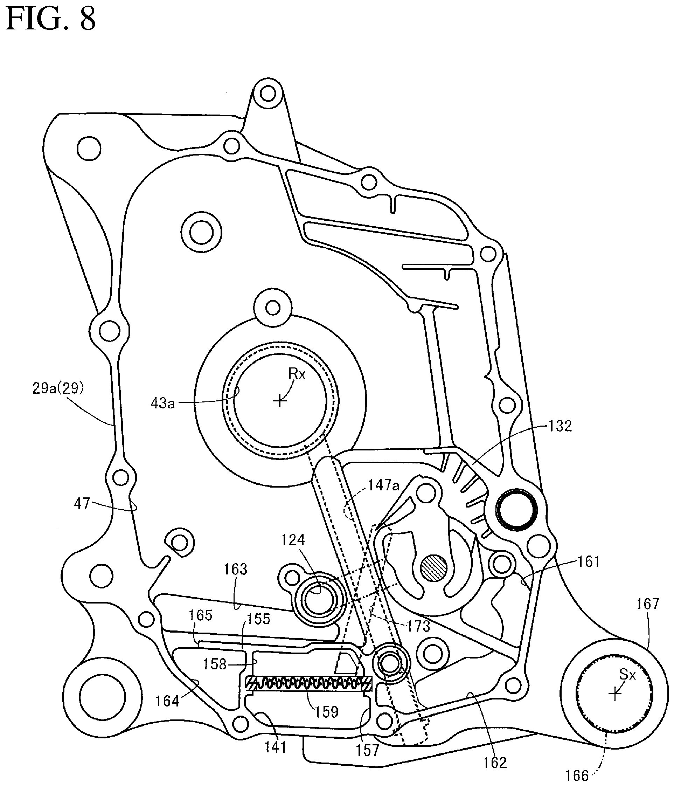

As illustrated in FIG. 8, the partition wall 155 enters the generator chamber 47 to divide the space in the generator chamber 47. Below the partition wall 155, between the first case half 29a and the generator cover 45, an introduction chamber 157 that is open by an introduction port 141 is defined. In the introduction chamber 157, a filter 159 is disposed. The filter 159 is opposed to the partition wall 155 from below to define a clean chamber 158 with the partition wall 155. The oil in the oil chamber 135 flows from the introduction port 141 into the introduction chamber 157 to be filtered by the filter 159. The oil then flows into the clean chamber 158.

The first case half 29a includes a first opening 161, a second opening 162, a third opening 163, and a fourth opening 164 that spatially connect the generator chamber 47 to the oil chamber 135. The first opening 161 and the second opening 162 are disposed in the second guide channel 152b. The third opening 163 is disposed above the partition wall 155. The third opening 163 is elongated in the front-rear direction along the partition wall 155. The fourth opening 164 is disposed below the partition wall 155. The generator chamber 47 includes a small hole 165 that connects the lower space to the upper space of the partition wall 155. The oil that flows from the first opening 161 and the second opening 162 into the generator chamber 47 flows from the small hole 165 and the fourth opening 164 along the partition wall 155. The oil flows from the fourth opening 164 into the first guide channel 152a in the oil chamber 135.

As illustrated in FIG. 3, the crankcase 29 includes a link boss 167 that rotatably holds a shaft element 166 about a swing axis Sx parallel to the rotation axis of the rear wheel WR and couples the crankcase 29 to the vehicle body frame 12. The shaft element 166 is coupled to the link 25. As illustrated in FIG. 6, the link boss 167 is disposed lower than a horizontal plane Hr that is in contact with the crank chamber 41 from below. The scavenge pump 121 is disposed between the link boss 167 and the crankshaft 42 as seen in a side view of the vehicle. The axis of the drive shaft 125 is at least set to be coaxial to the swing axis Sx and positioned inner than a virtual cylindrical plane Sw that includes the rotation axis Rx of the crankshaft 42.

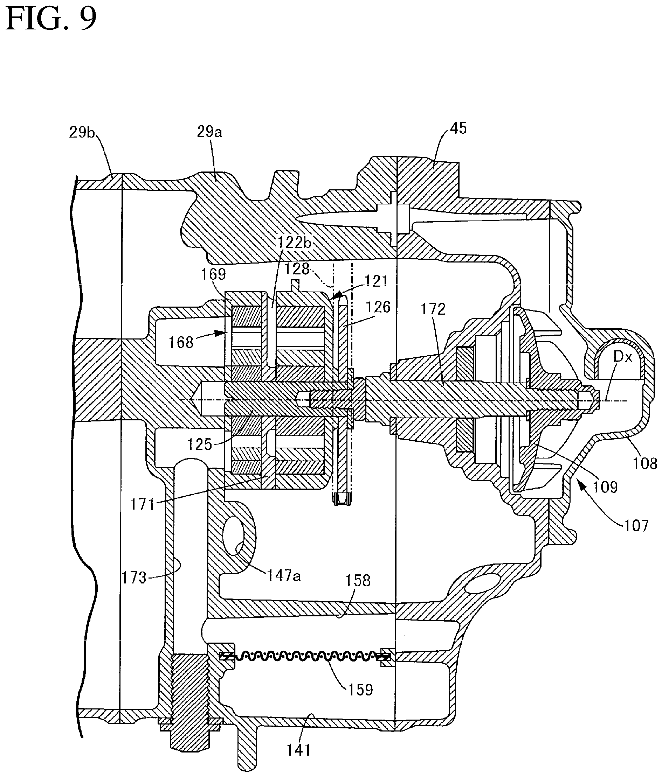

As illustrated in FIG. 9, the first case half 29a of the crankcase 29 is equipped with a feed pump 168 that supplies oil to the camshaft 78, the hydraulic tensioner 85, the crankshaft 42, the piston jet and others. The feed pump 168 is a trochoid pump. The feed pump 168 includes a pump body 169 that is overlaid on the outer surface of the first case half 29a and rotatably houses the outer rotor. To the pump body 169, a pump cover (hereinafter referred to as "the feed cover") 171 is coupled. The feed cover 171 functions also as the pump body that includes a suction port and a discharge port.

The outer rotor accommodates an inner rotor that is coupled to the drive shaft 125 and rotates coaxially to the inner rotor of the scavenge pump 121. The outer rotor and the inner rotor may be similar to those of a general trochoid pump. The scavenge pump 121 and the feed pump 168 include the shared drive shaft 125. To the drive shaft 125, a drive shaft 172 coupled to the impeller 109 of the water pump 107 is coaxially coupled. In this manner, the scavenge pump 121, the feed pump 168, and the water pump 107 share the drive shafts.

As illustrated in FIG. 8, the first case half 29a includes a linear suction passage (hereinafter referred to as "the feed suction passage") 173 that is open at the clean chamber 158 and connected to the suction port of the feed pump 168. As the drive shaft 125 rotates, the oil is drawn in from the oil chamber 135 via the feed suction passage 173. The discharge port of the feed pump 168 is connected to the first oil channel 143a. The oil discharged from the feed pump 168 flows into the oil filter. The feed suction passage 173 three-dimensionally crosses the scavenge suction passage 124. The feed suction passage 173 and the scavenge suction passage 124 three-dimensionally cross the longitudinal oil channels 147a, 147b.

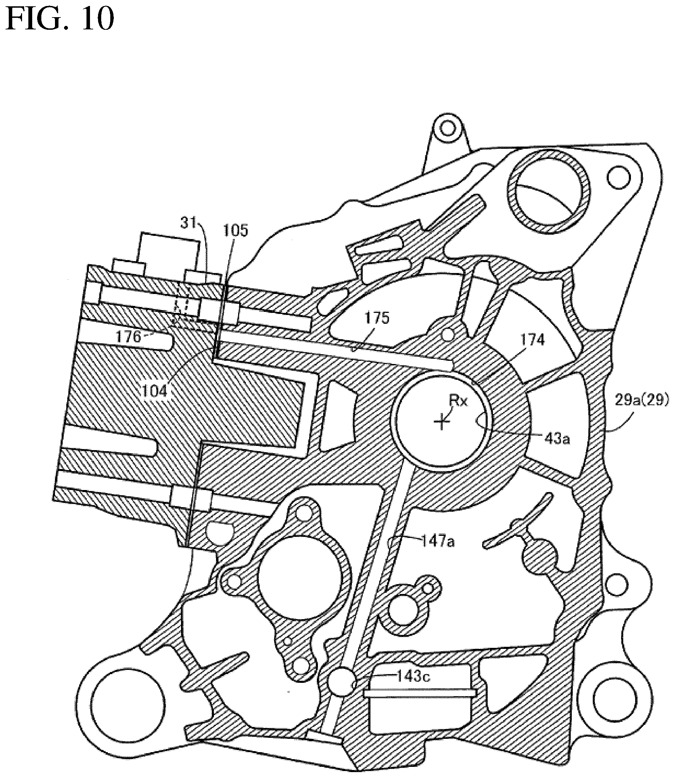

As illustrated in FIG. 10, the first case half 29a includes, in addition to the longitudinal oil channel 147a and the third oil channel 143c connected to the first sliding bearing 43a of the crankshaft 42, a lateral oil channel 175 that linearly extends from an oil channel 174 around the first sliding bearing 43a to reach the interface 104 between the crankcase 29 and the cylinder block 31. The cylinder block 31 includes an oil supply path 176 that is connected to the lateral oil channel 175 at the interface 104 between the crankcase 29 and the cylinder block 31 and connected to the supply path 95 of the hydraulic tensioner 85. The oil channel between the lateral oil channel 175 and the oil supply path 176 penetrates through the gasket 105.

Next, a description will be given of the operation of the motorcycle according to the present embodiment. When the engine 27 starts, the air-fuel mixture burns in the combustion chamber 76. The piston 74 reciprocates in the cylinder block 31. According to the reciprocation movement of the piston 74, the crankshaft 42 rotates about the rotation axis Rx. The cylinder block 31 and the cylinder head 32 are heated by the combustion heat and the friction heat.

The rotational drive force of the crankshaft 42 is transmitted to the drive shaft 172 of the water pump 107 via the drive chain 128. As the impeller 109 rotates, the cooling water flows from the discharge port 111 of the water pump 107 into the water jackets 106a, 106b via the first water channel 112 and the second water channel 113. The cooling water absorbs the thermal energy from the cylinder block 31 and the cylinder head 32 around the cylinder bore 73. The cylinder block 31 and the cylinder head 32 are cooled. Thus, any excessive increase in temperature is avoided.

The cooling water warmed by the thermal energy flows into the thermostat 114. The thermostat 114 feeds the cooling water to the first pipe 116 until the cooling water reaches a prescribed temperature. The cooling water flows into the first suction port 115 of the water pump 107 via the first pipe 116. The cooling water circulates without access to the radiator 118. The engine 27 is prevented from being excessively cooled until its temperature reaches a prescribed temperature.

When the temperature of the cooling water exceeds the prescribed temperature, the thermostat 114 feeds the cooling water to the third pipe 119. The cooling water flows into the radiator 118 via the third pipe 119. The radiator 118 releases the thermal energy of the cooling water to the outside air. The cooling water becomes cool. The cooled cooling water flows into the second suction port 115b of the water pump 107 via the second pipe 117. In this manner, the cooling water circulates via the radiator 118. Thus, the radiator 118 efficiently suppresses an increase in the temperature of the engine 27 when it exceeds a prescribed temperature.

The oil chamber 135 stores the engine oil. As the crankshaft 42 rotates, the drive shaft 125 rotates about the rotation axis Dx. When the inner rotor rotates in the feed pump 168, according to the rotation of the inner rotor and the outer rotor, the engine oil flows from the introduction port 141 into the introduction chamber 157. The engine oil is filtered by the filter 159 and drawn into the feed pump 168 from the feed suction passage 173. The feed pump 168 discharges the engine oil to the first oil channel 143a. The engine oil is filtered by the oil filter and flows from the second passage 143b into the third passage 143c.

The engine oil of the third passage 143c flows into the longitudinal oil channel 147a as a first path connected to the first sliding bearing 43a and continuous to the oil supply path 176, and the longitudinal oil channel 147b as a second path connected to the second sliding bearing 43b and continuous to the camshaft 78. From the longitudinal oil channel 147a, the engine oil is supplied to the first sliding bearing 43a. The first sliding bearing 43a is lubricated with the engine oil. The engine oil flows from the first sliding bearing 43a into the crank chamber 41.

The engine oil further flows from the oil channel 174 around the first sliding bearing 43a into the lateral oil channel 175. The engine oil is supplied from the lateral oil channel 175 to the hydraulic tensioner 85 via the oil supply path 176. By the cause of the high pressure chamber 99, the hydraulic tensioner 85 fully secures the tension of the cam chain 81. Any redundant engine oil is released from the hydraulic tensioner 85 into the cam chain chamber 82.

From the longitudinal oil channel 147b, the engine oil is supplied to the second sliding bearing 143b. The second sliding bearing 43b is lubricated by the engine oil. The engine oil flows from the second sliding bearing 43b into the crank chamber 41.

The engine oil further flows from the oil channel 148 around the second sliding bearing 43b into the lateral oil channel 151. The engine oil from the lateral oil channel 151 transverses the interface 104 and is supplied to the oil channel of the camshaft 78. The bearing of the camshaft 78 and the friction surface of the valve operating cam 78a are lubricated.

The engine oil is gathered by the surrounding wall 137 of the crank chamber 41 and flows from the lowermost position of the crank chamber 41 into the oil reservoir 138. In the scavenge pump 121, according to the rotation of the drive shaft 125, the inner rotor and the outer rotor rotate. The engine oil flows from the oil reservoir 138 into the scavenge suction passage 124. In the generator chamber 47, the engine oil is drawn into the scavenge pump 121 via the suction passage 124.

The scavenge pump 121 discharges the engine oil from the discharge port 122b toward the generator chamber 47. The engine oil is discharged from the discharge port 122b of the scavenge pump 121 and flows down along the wall in the generator chamber 47. The engine oil flows from the first opening 161 and the second opening 162 into the oil chamber 135. The engine oil flows into: the first guide channel 152a that passes through the communication hole 156 behind the passage wall 142 to reach the upstream end (the clean chamber 158) of the feed suction passage 173; and the second guide channel 152b that detours the first guide channel 152a ahead the passage wall 142 to reach the upstream end of the feed suction passage 173. Additionally, the engine oil flows from the third opening 163 and the fourth opening 164 into the oil chamber 135. The engine oil of the generator chamber 47 merges with the engine oil of the first guide channel 152a.

In the present embodiment, the crankcase 29 includes the scavenge suction passage 124 that is open at the crank chamber 41 and connected to the suction port 122a of the scavenge pump 121, and the scavenge discharge port 122b where the engine oil is discharged from the scavenge pump 121 to the oil chamber 135 that is separated from the crank chamber 41 and defined in the crankcase 29 below the crank chamber 41. What is disposed in the oil chamber 135 is the partition wall 155 that horizontally extends in the oil chamber 135 to divide the oil chamber 135 into the first channel space 153 on the upper side and the second channel space 154 on the lower side. The partition wall 155 includes at least one communication hole 156 continuous from the first channel space 153 to the second channel space 154. In the oil chamber 135, the engine oil flows downward by gravity. The partition wall 155 regulates the flow of the engine oil from the first channel space 153 to the second channel space 154. By adjusting the position of the communication hole 156, the channel of the engine oil is set to a desired length. The channel of a sufficient length facilitates the release of bubbles from the engine oil. The feed pump 168 supplies the engine oil of a sufficient amount in response to the release of bubbles.

The scavenge pump 121 has its discharge port 122b opposed to the inner wall 129 of the crankcase 29. The scavenge pump 121 discharges the engine oil toward the inner wall 129 of the crankcase 29. The engine oil flows down the wall. This suppresses generation of bubbles. On the other hand, if the discharge port 122b of the scavenge pump 121 is directed to the crankshaft 42, the engine oil would be agitated by the rotation of the crankshaft 42 and bubbles would be easily generated. If the discharge port 122b of the scavenge pump 121 is directed downward, the engine oil would splash into the surface of the accumulated engine oil and bubbles would be easily generated.

The crankcase 29 according to the present embodiment includes: the scavenge suction passage 124 that is open at the crank chamber 41 and connected to the suction port 122a of the scavenge pump 121; the scavenge discharge port 122b where the engine oil is discharged from the scavenge pump 121 to the oil chamber 135; the feed suction passage 173 that is connected to the suction port of the feed pump 168 to draw in the engine oil from the oil chamber 135; and the longitudinal oil channels 147a, 147b and the third oil channel 143c (the feed discharge passages) connected to the discharge port of the feed pump 168 and guiding the engine oil toward the first sliding bearing 43a and the second sliding bearing 43b of the crankshaft 42. Here, the feed suction passage 173 three-dimensionally crosses the scavenge suction passage 124. The feed suction passage 173 and the scavenge suction passage 124 three-dimensionally cross the longitudinal oil channels 147a, 147b. The positioning relationship of the feed suction passage 173, the scavenge suction passage 124, and the longitudinal oil channels 147a, 147b is flexible. Accordingly, the engine oil paths can be effectively designed without being constrained by the positional relationship of the feed suction passage 173, the scavenge suction passage 124, and the longitudinal oil channels 147a, 147b.

The engine 27 further includes the water pump 107 that includes the drive shaft 172 coupled to the drive shaft 125 of the scavenge pump 121 and the feed pump 168. That is, the water pump 107 shares the drive shaft with the scavenge pump 121 and the feed pump 168. The water pump 107 causes the cooling water to flow, to contribute to cooling the engine oil. Since the scavenge pump 121, the feed pump 168, and the water pump 107 share the drive shafts 125, 172, the number of components is reduced. The space efficiency improves.

The oil chamber 135 includes the first guide channel 152a that passes through the communication hole 156 to reach the upstream end of the feed suction passage 173, and the second guide channel 152b that detours the first guide channel 152a to reach the upstream end of the feed suction passage 173. The first guide channel 152a and the second guide channel 152b forming branches provides a sufficient length from the scavenge discharge passage 136 to the feed suction passage 173. The channel of a sufficient length facilitates the release of bubbles from the engine oil. The feed pump 168 supplies the engine oil of a sufficient amount in response to the release of bubbles.

The engine 27 according to the present embodiment further includes a third guide channel that is continuous from the second guide channel 152b to the first channel space 153. This provides a fully added length from the second guide channel 152b to the feed suction passage 173. The channel of a sufficient length facilitates the release of bubbles from the engine oil. The feed pump 168 supplies the engine oil of a sufficient amount in response to the release of bubbles.

The engine 27 includes the filter 159 that is opposed to the partition wall 155 from below to define the clean chamber 158 with the partition wall 155. The clean chamber 158 is connected to the entrance of the feed suction passage 173. The engine oil flowing into the feed suction passage 173 is purified by the filter 159.

## Claims

1. A saddled vehicle (11) comprising:
a vehicle body frame (12);
a crankcase (29) that defines a crank chamber (41) for housing a counterweight (42a) of a crankshaft (42), the crankcase (29) being coupled to the vehicle body frame (12) to swing about a swing axis (Sx);
a scavenge pump (121) that is fixed to the crankcase (29) and recovers oil in the crank chamber (41);
a scavenge suction passage (124) that is open at the crank chamber (41) and connected to a suction port (122a) of the scavenge pump (121); and
a scavenge discharge port (122b) where the oil is discharged from the scavenge pump (121) into an oil chamber (135) that is separated from the crank chamber (41) and provided in the crankcase (29) below the crank chamber (41), **characterised in that**
the oil chamber (135) includes a partition wall (155) that laterally partitions the oil chamber (135) to divide the oil chamber (135) into a first channel space (153) on an upper side and a second channel space (154) on a lower side, and
the partition wall (155) includes at least one communication hole (156) that is continuous from the first channel space (153) to the second channel space (154) and that allows the oil to flow from the first channel space (153) to the second channel space (154).

2. The saddled vehicle according to claim 1, wherein the scavenge pump (121) has its discharge port (122a) opposed to an inner wall (129) of the crankcase (29).

3. The saddled vehicle according to claim 1 or 2, further comprising
a feed suction passage (173) connected to a suction port of a feed pump (168) and draws in the oil from the oil chamber (135), and
a feed discharge passage (147a, 147b) that is connected to a discharge port of the feed pump (168) and guides the oil toward bearing (43a, 43b) of the crankshaft (42), wherein
at least two out of the scavenge suction passage (124), the feed suction passage (173), and the feed discharge passage (174a, 174b) three-dimensionally cross each other.

4. The saddled vehicle according to claim 3, further comprising a water pump (107) that shares a drive shaft (172) with the scavenge pump (121) and the feed pump (168).

5. The saddled vehicle according to claim 3 or 4, further comprising
a first guide channel (152a) that passes through the communication hole (156) to reach an upstream end of the feed suction passage (173), and
a second guide channel (152b) that detours the first guide channel (152a) to reach the upstream end of the feed suction passage (173).

6. The saddled vehicle according to any one of claims 3 to 5, further comprising a filter (159) that is opposed to the partition wall (155) from below to define space (158) with the partition wall (155), the space (158) being connected to an entrance of the feed suction passage (173).

## Patentansprüche

1. Sattelfahrzeug (11), das aufweist:
einen Fahrzeugkarosserierahmen (12);
ein Kurbelwellengehäuse (29), das eine Kurbelkammer (41) definiert, um ein Gegengewicht (42a) einer Kurbelwelle (42) aufzunehmen, wobei das Kurbelwellengehäuse (29) mit dem Fahrzeugkarosserierahmen (12) gekoppelt ist, um um eine Schwingachse (Sx) zu schwingen;
eine Absaugpumpe (121), die am Kurbelwellengehäuse (29) befestigt ist und Öl in der Kurbelkammer (41) zurückgewinnt;
einen Absaugansaugkanal (124), der an der Kurbelkammer (41) geöffnet ist und mit einer Ansaugöffnung (122a) der Absaugpumpe (121) verbunden ist; und
eine Absaugauslassöffnung (122b), bei der Öl aus der Absaugpumpe (121) in eine Ölkammer (135) ausgelassen wird, die von der Kurbelkammer (41) getrennt ist und im Kurbelwellengehäuse (29) unter der Kurbelkammer (41) vorgesehen ist,
**dadurch gekennzeichnet, dass**
die Ölkammer (135) eine Trennwand (155) aufweist, die die Ölkammer (135) seitlich unterteilt, um die Ölkammer (135) in einen ersten Kanalraum (153) an einer Oberseite und einen zweiten Kanalraum (154) an einer Unterseite zu unterteilen, und
die Trennwand (155) wenigstens eine Austauschöffnung (156) aufweist, die vom ersten Kanalraum (153) in den zweiten Kanalraum (154) fortlaufend ist und die dem Öl ermöglicht, aus dem ersten Kanalraum (153) in den zweiten Kanalraum (154) zu fließen.

2. Sattelfahrzeug nach Anspruch 1, wobei die Absaugpumpe (121) ihre Auslassöffnung (122a) gegenüberliegend zu einer Innenwand (129) des Kurbelwellengehäuses (29) hat.

3. Sattelfahrzeug nach Anspruch 1 oder 2, das weiterhin aufweist
einen Zuleitungsansaugkanal (173), der mit einer Ansaugöffnung einer Zuleitungspumpe (168) verbunden ist und das Öl aus der Ölkammer (135) ansaugt, und
einen Zuleitungsauslasskanal (147a, 147b), der mit einer Auslassöffnung der Zuleitungspumpe (168) verbunden ist und das Öl in Richtung des Lagers (43a, 43b) der Kurbelwelle (42) führt, wobei
wenigstens zwei von dem Absaugansaugkanal (124), dem Zuleitungsansaugkanal (173) und dem Zuleitungsauslasskanal (174a, 174b) einander dreidimensional schneiden.

4. Sattelfahrzeug nach Anspruch 3, das weiterhin eine Wasserpumpe (107) aufweist, die eine Antriebswelle (172) mit der Ansaugpumpe (121) und der Zuleitungspumpe (168) gemeinsam nutzt.

5. Sattelfahrzeug nach Anspruch 3 oder 4, das weiterhin aufweist
einen ersten Führungskanal (152a), der durch die Austauschöffnung (156) hindurchgeht, um ein vorgelagertes Ende des Zuleitungsansaugkanals (173) zu erreichen, und
einen zweiten Führungskanal (152b), der den ersten Führungskanal (152a) umlenkt, um das vorgelagerte Ende des Zuleitungsansaugkanals (173) zu erreichen.

6. Sattelfahrzeug nach einem der Ansprüche 3 bis 5, das weiterhin aufweist
einen Filter (159), der zu einer Trennwand (155) von unten gegenüberliegend ist, um einen Raum (158) mit der Trennwand (155) zu definieren, wobei der Raum (158) mit einem Eingang des Zuleitungsansaugkanals (173) verbunden ist.

## Revendications

1. Véhicule à selle (11) comprenant :
un cadre de corps de véhicule (12) ;
un carter de vilebrequin (29) qui définit une chambre de vilebrequin (41) pour loger un contrepoids (42a) d'un vilebrequin (42), le carter de vilebrequin (29) étant couplé au cadre de corps de véhicule (12) pour osciller autour d'un axe d'oscillation (Sx) ;
une pompe de récupération (121) qui est fixée sur le carter de vilebrequin (29) et récupère l'huile dans la chambre de vilebrequin (41) ;
un passage d'aspiration de récupération (124) qui est ouvert au niveau de la chambre de vilebrequin (41) et relié à un orifice d'aspiration (122a) de la pompe de récupération (121) ; et
un orifice d'évacuation de récupération (122b) où l'huile est évacuée à partir de la pompe de récupération (121) dans une chambre d'huile (135) qui est séparée de la chambre de vilebrequin (41) et prévue dans le carter de vilebrequin (29) au-dessous de la chambre de vilebrequin (41), **caractérisé en ce que**
la chambre d'huile (135) comporte une paroi de séparation (155) qui sépare latéralement la chambre d'huile (135) pour diviser la chambre d'huile (135) en un premier espace de canal (153) sur un côté supérieur et un deuxième espace de canal (154) sur un côté inférieur, et
la paroi de séparation (155) comporte au moins un trou de communication (156) qui est continu à partir du premier espace de canal (153) vers le deuxième espace de canal (154) et qui permet à l'huile de s'écouler à partir du premier espace de canal (153) vers le deuxième espace de canal (154).

2. Véhicule à selle selon la revendication 1, dans lequel la pompe de récupération (121) présente son orifice d'évacuation (122a) opposé à une paroi intérieure (129) du carter de vilebrequin (29).

3. Véhicule à selle selon la revendication 1 ou 2, comprenant en outre
un passage d'aspiration d'alimentation (173) relié à un orifice d'aspiration d'une pompe d'alimentation (168) et attire l'huile à partir de la chambre d'huile (135), et
un passage d'évacuation d'alimentation (147a, 147b) qui est relié à un orifice d'évacuation de la pompe d'alimentation (168) et guide l'huile en direction du palier (43a, 43b) du vilebrequin (42), dans lequel
au moins deux parmi le passage d'aspiration de récupération (124), le passage d'aspiration d'alimentation (173), et le passage d'évacuation d'alimentation (174a, 174b) se croisent mutuellement de manière tridimensionnelle.

4. Véhicule à selle selon la revendication 3, comprenant en outre une pompe à eau (107) qui partage un arbre d'entraînement (172) avec la pompe de récupération (121) et la pompe d'alimentation (168).

5. Véhicule à selle selon la revendication 3 ou 4, comprenant en outre
un premier canal de guidage (152a) qui passe à travers le trou de communication (156) pour atteindre une extrémité amont du passage d'aspiration d'alimentation (173), et
un deuxième canal de guidage (152b) qui contourne le premier canal de guidage (152a) pour atteindre l'extrémité amont du passage d'aspiration d'alimentation (173).

6. Véhicule à selle selon l'une quelconque des revendications 3 à 5, comprenant en outre un filtre (159) qui est opposé à la paroi de séparation (155) à partir du bas pour définir un espace (158) avec la paroi de séparation (155), l'espace (158) étant relié à une entrée du passage d'aspiration d'alimentation (173).
